# EUROPEAN PATENT APPLICATION

(11) **EP 4 850 808 A1**
(43) Date of publication of application: **09.12.2026**
(21) Application number: 25748277.8
(22) Date of filing: 22.01.2025
(51) Int. Cl.: B01J 20/22, B01D 53/14, C01B 32/50, C01B 32/312

(54) **POROUS CARBON FOR ACIDIC GAS SOLID ABSORBING MATERIAL CARRIER, ACIDIC GAS SOLID ABSORBING MATERIAL, METHOD FOR SEPARATING AND RECOVERING ACIDIC GAS, AND ACIDIC GAS SEPARATION AND RECOVERY SYSTEM**

(30) Priority: 31.01.2024 JP 2024013257
(71) Applicant: Kuraray Co., Ltd., Kurashiki-shi, Okayama 710-0801 (JP)
(72) Inventor: KANDA, Kazuaki, Kurashiki-shi, Okayama 710-0801 (JP); KOBAYASHI, Shohei, Kurashiki-shi, Okayama 710-0801 (JP)
(74) Representative: Müller-Boré & Partner Patentanwälte PartG mbB
(86) International application number: PCT/JP2025/001918
(87) International publication number: WO 2025/164469

(57) **Abstract**

The present invention relates to porous carbon for an acidic gas solid absorber carrier, wherein a pore volume of pores having a pore diameter of 2 nm or more and 200 nm or less calculated by a BJH method from a nitrogen adsorption isotherm is 0.7 cm³/g or more, and a ratio of a pore volume of pores having a pore diameter of 2 nm or less calculated by a QS-DFT method from a nitrogen adsorption isotherm to a sum of the pore volume of the pores having a pore diameter of 2 nm or more and 200 nm or less calculated by the BJH method and the pore volume of the pores having a pore diameter of 2 nm or less calculated by the QS-DFT method is 45% or less.

## Description

### TECHNICAL FIELD

The present invention relates to porous carbon for an acidic gas solid absorber carrier, an acidic gas solid absorber comprising porous carbon and an acidic gas absorbent attached to the porous carbon, a method for separating and capturing an acidic gas using the solid absorber, and an acidic gas separation and capture system comprising the solid absorber.

### BACKGROUND ART

Carbon dioxide emitted from industries, automobiles, and homes is regarded as a causative substance of global warming, and sulfur oxides (SOx) and nitrogen oxides (NOx) generated due to combustion of fossil fuels such as coal and petroleum or an oxidation reaction of nitrogen in an automobile engine are regarded as causative substances of acidification of the environment. Efforts to reduce such acidic gases are being made on a global level. As one of them, a carbon dioxide separation and capture technique has been studied. Examples of the source of generation of a large amount of carbon dioxide include thermal power plants, ironworks, cement plants, and oil refineries, and in at least a part of these facilities, carbon dioxide is captured by separation and capture techniques such as a physical absorption method, a chemical absorption method, a solid absorption method, and a membrane separation method. In the chemical absorption method, a solid absorber is mainly used, and for example, as a solid absorber that absorbs carbon dioxide, a carbon dioxide gas adsorbent in which an amine compound having high reactivity with carbon dioxide gas is contained in a porous substance is known (Patent Document 1). In addition, as a solid adsorbent capable of efficiently capturing an acidic gas and increasing the capture amount of the acidic gas, an adsorbent comprising an inorganic porous body and an amine compound, wherein the inorganic porous body has a pore volume of 1.2 cm³/g or more and 3.5 cm³/g or less, and a peak diameter of a pore diameter determined on the basis of a nitrogen adsorption method is 20 nm or more and 100 nm or less is known (Patent Document 2).

As an acidic gas separation and capture system using a solid absorber, for example, there are a fixed bed type acidic gas separation and capture system in which a gas to be treated is alternately introduced into two columns filled with a solid absorber, and absorption of an acidic gas and regeneration of the solid absorber are alternately performed to continuously capture the acidic gas and a moving bed type acidic gas separation and capture system in which a solid absorber moves in the system by a conveyor, a honeycomb rotor/container, or the like, absorbs an acidic gas from the gas to be treated in an absorption zone, releases the acidic gas absorbed in a regeneration zone, and captures the released acidic gas. In the acidic gas separation and capture systems as described above, it is important to reduce the separation and capture energy and the separation and capture cost, and in order to increase the treatment amount per hour, it is required to shorten the time of one cycle in the system and to increase the efficiency of separation and capture of an acidic gas.

For example, in existing moving bed type carbon dioxide separation and capture systems including a honeycomb rotor, the rotation time of the honeycomb rotor and the passing time of the absorption and regeneration (desorption) zones vary depending on the diameter and volume of the honeycomb rotor. For example, in existing systems, the honeycomb rotor rotates one turn in about 3 to 5 minutes, and the rotating honeycomb rotor passes through the absorption zone in about 30 seconds to 180 seconds.

### PRIOR ART DOCUMENT

### PATENT DOCUMENT

Patent Document 1: JP-A-H04-200742
Patent Document 2: WO 2022/102683 A

### SUMMARY OF THE INVENTION

### PROBLEMS TO BE SOLVED BY THE INVENTION

According to the studies by the present inventors, there is a demand for a highly efficient carbon dioxide solid absorber having a high carbon dioxide adsorption rate in a short time (e.g., 30 seconds to a few minutes, preferably 30 seconds to 180 seconds) and a high carbon dioxide desorption rate in such a short time and a high carbon dioxide adsorption amount and a high carbon dioxide desorption amount.

A challenge of the present invention is to provide porous carbon for an acidic gas solid absorber carrier having an excellent acidic gas adsorption/desorption rate in a short time and a high acidic gas adsorption/desorption amount in a short time when used as a carrier of an acidic gas solid absorber in separation and capture of an acidic gas such as carbon dioxide.

### SOLUTIONS TO THE PROBLEMS

The present inventors conducted detailed studies on porous carbon to solve the above problems, and have accomplished the present invention. That is, the present invention includes the following preferred embodiments.
[1] Porous carbon for an acidic gas solid absorber carrier, wherein a pore volume of pores having a pore diameter of 2 nm or more and 200 nm or less calculated by a BJH method from a nitrogen adsorption isotherm is 0.7 cm³/g or more, and a ratio of a pore volume of pores having a pore diameter of 2 nm or less calculated by a QS-DFT method from a nitrogen adsorption isotherm to a sum of the pore volume of the pores having a pore diameter of 2 nm or more and 200 nm or less calculated by the BJH method and the pore volume of the pores having a pore diameter of 2 nm or less calculated by the QS-DFT method is 45% or less.
[2] The porous carbon according to [1], wherein a slope of an approximate straight line obtained by converting a change in pressure of nitrogen until reaching an adsorption equilibrium at each prescribed relative pressure in measurement of a nitrogen adsorption isotherm into a mass transfer coefficient using LDF approximation and linearly approximating a relationship between a relative pressure and a mass transfer coefficient at a relative pressure of 1.0 × 10⁻⁴ or more and 1.0 × 10⁻³ or less is 0.95 or more.
[3] The porous carbon according to [1] or [2], wherein the porous carbon has a bulk density of 0.17 g/cm³ or less.
[4] The porous carbon of any of [1] to [3], wherein the acidic gas is carbon dioxide.
[5] An acidic gas solid absorber comprising the porous carbon according to any one of [1] to [4] and an acidic gas absorbent, wherein the acidic gas absorbent is attached to the porous carbon.
[6] The acidic gas solid absorber according to [5], wherein the acidic gas absorbent is an amine compound.
[7] The acidic gas solid absorber according to [5] or [6], wherein a pore volume of pores having a pore diameter of 2 nm or more and 200 nm or less calculated by a BJH method from a nitrogen adsorption isotherm is 0.7 cm³/g or more, and a ratio of a pore volume of pores having a pore diameter of 2 nm or less calculated by a QS-DFT method from a nitrogen adsorption isotherm to a sum of the pore volume of the pores having a pore diameter of 2 nm or more and 200 nm or less calculated by the BJH method and the pore volume of the pores having a pore diameter of 2 nm or less calculated by the QS-DFT method is 40% or less.
[8] A method for separating and recovering an acidic gas, the method comprising: an absorption step of bringing a gas to be treated into contact with the acidic gas solid absorber according to any one of [5] to [7] to allow the acidic gas solid absorber to absorb the acidic gas; and a desorption step of desorbing the acidic gas absorbed in the absorption step from the acidic gas solid absorber, wherein the desorption step comprises subjecting the acidic gas solid absorber to at least one or more selected from the group consisting of (A) depressurization; (B) contact with an inert gas containing no acidic gas; and (C) heating.
[9] A moving bed type acidic gas separation and capture system comprising the acidic gas solid absorber according to any one of [5] to [7] in a moving bed.
[10] The moving bed type acidic gas separation and capture system according to [9], comprising a rotary honeycomb rotor as means for moving the acidic gas solid absorber, wherein the acidic gas solid absorber is carried on the rotary honeycomb rotor.

### EFFECTS OF THE INVENTION

According to the present invention, it is possible to provide porous carbon for an acidic gas solid absorber carrier having an excellent acidic gas adsorption/desorption rate in a short time and a high acidic gas adsorption/desorption amount in a short time when used as a carrier of an acidic gas solid absorber in separation and capture of an acidic gas such as carbon dioxide.

### BRIEF DESCRIPTION OF THE DRAWINGS

[Fig. 1] Fig. 1 is a graph showing a relationship between a relative pressure and a mass transfer coefficient of the porous carbon in Example 1.
[Fig. 2] Fig. 2 is a graph showing the amount of carbon dioxide adsorbed per gram of each of solid absorbers 1-1 to 1-5 and 4-1 to 4-5.
[Fig. 3] Fig. 3 is a graph showing a carbon dioxide adsorption rate per gram of each of solid absorbers 1-1 to 1-5 and 4-1 to 4-5.

### DETAILED DESCRIPTION

Hereinafter, embodiments of the present invention will be described in detail. It is noted that the following is a description that exemplifies embodiments of the present invention, and the present invention is not intended to be limited to the following embodiments.

### [Porous carbon]

The porous carbon for an acidic gas solid absorber carrier of the present invention has a characteristic pore structure in which a pore volume of pores having a pore diameter of 2 nm or more and 200 nm or less calculated by a BJH method from a nitrogen adsorption isotherm is 0.7 cm³/g or more, and a ratio of a pore volume of pores having a pore diameter of 2 nm or less calculated by a QS-DFT method from a nitrogen adsorption isotherm to a sum of the pore volume of the pores having a pore diameter of 2 nm or more and 200 nm or less calculated by the BJH method and the pore volume of the pores having a pore diameter of 2 nm or less calculated by the QS-DFT method is 45% or less.

### <Pore volume of pores having pore diameter of 2 nm or more and 200 nm or less>

In the porous carbon, the lower limit value of the pore volume of pores having a pore diameter of 2 nm or more and 200 nm or less (hereinafter, it may be referred to as a "volume of pores sized 2 nm or more and 200 nm or less") calculated from a nitrogen adsorption isotherm by the BJH method is 0.7 cm³/g, and the upper limit value is not particularly limited, but is usually 4.00 cm³/g. The volume of pores sized 2 nm or more and 200 nm or less is preferably 0.80 to 4.00 cm³/g, more preferably 0.90 to 3.90 cm³/g, still more preferably 1.00 to 3.80 cm³/g, further preferably 1.30 to 3.70 cm³/g, particularly preferably 1.60 to 3.60 cm³/g, more particularly preferably 1.70 to 3.50 cm³/g, extremely preferably 1.80 to 3.40 cm³/g, and more extremely preferably 1.90 to 3.30 cm³/g. The pores sized 2 nm or more and 200 nm or less are considered to be involved in the attachment of the acidic gas absorbent (for example, an amine compound in the case where the acidic gas is carbon dioxide) to the porous carbon, and the adsorption and desorption of the acidic gas in the acidic gas solid absorber. When the volume of pores sized 2 nm or more and 200 nm or less is equal to or more than the lower limit value, in the use of porous carbon as a carrier of an acidic gas solid absorber, the acidic gas solid absorber can have an excellent acidic gas adsorption/desorption rate in a short time (e.g., 30 seconds to a few minutes, preferably 30 seconds to 180 seconds) and a high acidic gas adsorption/desorption amount in such a short time because the porous carbon tends to have a pore structure in which not only a sufficient amount of an acidic gas absorbent can be attached to the porous carbon, but also pores in which an acidic gas can migrate smoothly are maintained even after the attachment of the acidic gas absorbent. If the volume of pores sized 2 nm or more and 200 nm or less is less than 0.7 cm³/g, it is difficult for the acidic gas solid absorber to have an excellent acidic gas adsorption/desorption rate in a short time and a high acidic gas adsorption/desorption amount in a short time. When the volume of pores sized 2 nm or more and 200 nm or less is equal to or less than the upper limit value, the porous carbon can have strength sufficient for maintaining the structure.

The volume of pores sized 2 nm or more and 200 nm or less can be adjusted to equal to or more than the lower limit value and equal to or less than the upper limit value, or to within the above range by, for example, appropriately adjusting the types and/or the proportions of the carbon source and the pore source; the type of a metal organic acid; the temperature and/or the time of the heat treatment step (phase separation step and/or carbonization step); or the like in the method for producing porous carbon described later. The volume of pores sized 2 nm or more and 200 nm or less can be calculated by analyzing a nitrogen adsorption isotherm of the porous carbon by the BJH method, which is known in the art.

### <Volume of pores sized 2 nm or less determined by nitrogen adsorption method>

In one preferred embodiment, the upper limit value of the pore volume of pores having a pore diameter of 2 nm or less (hereinafter, sometimes referred to as a "volume of pores sized 2 nm or less" or a "micropore volume") calculated from a nitrogen adsorption isotherm of the porous carbon by the QS-DFT method is preferably 0.35 cm³/g, and the lower limit value thereof is not particularly limited, but is preferably 0.01 cm³/g. The pore volume of pores having a pore diameter of 2 nm or less is preferably 0.01 to 0.35 cm³/g, more preferably 0.01 to 0.30 cm³/g, still more preferably 0.01 to 0.20 cm³/g, and particularly preferably 0.01 to 0.15 cm³/g. When the micropore volume is equal to or less than the upper limit value, the volume of pores having a pore diameter of 2 to 200 nm tends to be high, and therefore the acidic gas solid absorber can have an excellent acidic gas adsorption/desorption rate in a short time and a high acidic gas adsorption/desorption amount in a short time. The pore volume of pores having a pore diameter of 2 nm or less can be adjusted to equal to or more than the lower limit value and equal to or less than the upper limit value or to within the above range by, for example, appropriately adjusting the types and/or the proportions of the carbon source and the pore source; the type of a metal organic acid; the temperature and/or the time of the heat treatment step (phase separation step and/or carbonization step); or the like in the method for producing porous carbon described later.

The pore volume of pores having a pore diameter of 2 nm or less can be calculated by analyzing a nitrogen adsorption isotherm of the porous carbon by the QS-DFT method, which is known in the art.

### <Ratio of pore volume of pores having pore diameter of 2 nm or less calculated by QS-DFT method to sum of pore volume of pores having pore diameter of 2 nm or more and 200 nm or less calculated by BJH method and pore volume of pores having pore diameter of 2 nm or less calculated by QS-DFT method>

The ratio of the pore volume of pores having a pore diameter of 2 nm or less calculated by the QS-DFT method to the sum of the pore volume of pores having a pore diameter of 2 nm or more and 200 nm or less calculated by the BJH method and the pore volume of pores having a pore diameter of 2 nm or less calculated by the QS-DFT method (this ratio is sometimes referred to as a micropore ratio) is calculated using the following equation. [Math 1] $Micropore ratio \left(%\right) = \frac{Volume of pores sized 2 nm or less}{\begin{matrix}Volume of pores sized 2 nm or more and 200 nm or less \\ + volume of pores sized 2 nm or less\end{matrix}} \times 100$

The upper limit value of the micropore ratio is 45%, and the lower limit value is not particularly limited, but is usually 0%. The micropore ratio is preferably 0 to 45%, more preferably 0 to 40%, still more preferably 0 to 30%, further preferably 0 to 25%, particularly preferably 0 to 20%, more particularly preferably 0 to 15%, extremely preferably 0 to 10%, and more extremely preferably 0 to 5%. Pores sized 2 nm or less are pores which, when an acidic gas absorbent is attached to porous carbon, are clogged or narrowed by the acidic gas absorbent, and are not useful for desired adsorption and desorption of the acidic gas. When the micropore ratio is equal to or less than the upper limit value, the volume of pores sized 2 nm or less tends to be small, and therefore a sufficient amount of the acidic gas absorbent can be attached to the porous carbon, and pores in which the acidic gas can migrate smoothly can be maintained even after the attachment of the acidic gas absorbent, so that the acidic gas solid absorber can have an excellent acidic gas adsorption/desorption rate in a short time and a high acidic gas adsorption/desorption amount in a short time.

### <Relationship between mass transfer coefficient and relative pressure, and mass transfer coefficient>

The mass transfer coefficient of porous carbon is an index representing the speed of migration when an acidic gas migrates in pores in an acidic gas solid absorber produced using porous carbon. As the change in the mass transfer coefficient with respect to the change in the relative pressure is larger, the acidic gas can smoothly move from mesopores to micropores, and can smoothly move from the micropores to the mesopores. In addition, the larger the mass transfer coefficient is, the larger the migration speed of the acidic gas in the pores of the acidic gas solid absorber is. Therefore, by examining the change in the mass transfer coefficient with respect to the change in the relative pressure, and the value of the mass transfer coefficient, the acidic gas adsorption-desorption characteristics of the acidic gas solid absorber and the pore characteristics of the porous carbon useful for the acidic gas adsorption/desorption characteristics of the acidic gas solid absorber can be evaluated. Here, in accordance with IUPAC, micropores refer to pores having a diameter of 2 nm or less, and mesopores refer to pores having a diameter of 2 to 50 nm.

The relationship between the relative pressure and the mass transfer coefficient, and the mass transfer coefficient can be examined by letting porous carbon adsorb nitrogen gas at -196°C, producing an adsorption isotherm, and analyzing the adsorption isotherm. Specifically, for example, as described in Examples described later, an adsorption isotherm of nitrogen of porous carbon is produced, and a change in pressure of nitrogen until reaching an adsorption equilibrium at each prescribed relative pressure is converted into a mass transfer coefficient using LDF approximation. Next, by producing a graph with the relative pressure on the x-axis and the mass transfer coefficient on the y-axis, the relationship between the relative pressure and the mass transfer coefficient can be expressed.

In this graph, the slope of an approximate straight line drawn in a relative pressure range of 1.0 × 10⁻⁴ or more and 1.0 × 10⁻³ or less [in the present description, this slope may be referred to as slope (a)] is preferably 0.95 or more.

Here, the reason the range of the relative pressure is set to 1.0 × 10⁻⁴ or more and 1.0 × 10⁻³ or less will be described. The porous carbon of the present invention is used as a carrier of a solid absorber for absorbing an acidic gas. The solid absorber comprises porous carbon and an acidic gas absorbent attached to the porous carbon. At least a part of the pores of the porous carbon is clogged or narrowed by the attached acidic gas absorbent. In the present description, pores having a diameter of approximately 2 to 200 nm to at least a part of which the acidic gas absorbent is attached are assumed as a diffusion path of the acidic gas to be adsorbed to the acidic gas absorbent. When the relative pressure is excessively low, that is, when the relative pressure is less than 1.0 × 10⁻⁴, it is considered that the diffusion behavior in pores smaller than such pores effectively acting as a migration path of the acidic gas is reflected in the mass transfer coefficient. On the other hand, when the relative pressure is excessively high, that is, when the relative pressure is higher than 1.0 × 10⁻³, it is considered that the diffusion behavior in pores larger than such pores effectively acting as a migration path of the acidic gas is reflected to the mass transfer coefficient. By setting the relative pressure to 1.0 × 10⁻⁴ or more and 1.0 × 10⁻³ or less, it is possible to evaluate a region where the adsorption/desorption behavior of the acidic gas assumed in the present description is reflected to the mass transfer coefficient, and by examining the slope of the approximate straight line in this range, it is possible to evaluate the acidic gas adsorption/desorption characteristics of the acidic gas solid absorber and the pore characteristics of the porous carbon useful for the acidic gas adsorption/desorption characteristics of the acidic gas solid absorber.

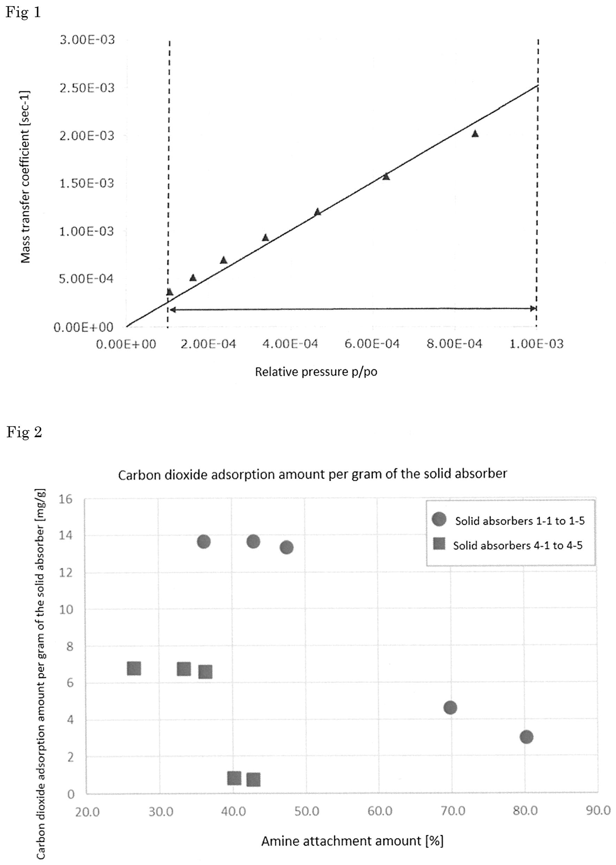

A more specific method for determining the slope (a) will be described using a graph showing a relationship between the relative pressure and the mass transfer coefficient of the porous carbon of Example 1 described later shown in Fig. 1.

First, an approximate straight line is drawn in a relative pressure range of 1.0 × 10⁻⁴ or more and 1.0 × 10⁻³ or less (in Fig. 1, this range is shown by a broken line and an arrow) in a graph showing the relationship between the relative pressure and the mass transfer coefficient, produced as described in Examples described later. Next, the slope (a) of the approximate straight line is determined.

The slope (a) is preferably 0.95 or more, and usually is, but is not limited to, 10 or less. The slope (a) is preferably 0.95 to 10, more preferably 1 to 10, still more preferably 1.5 to 10, further preferably 2 to 10, particularly preferably 3 to 10, more particularly preferably 4 to 10, extremely preferably 5 to 10, and more extremely preferably 6 to 10. When the slope (a) is equal to or more than the lower limit value, in the use of porous carbon as a carrier of an acidic gas solid absorber, the acidic gas solid absorber can have an excellent acidic gas adsorption/desorption rate in a short time and a high acidic gas adsorption/desorption amount in a short time because the porous carbon tends to have a suitable pore structure in which not only a sufficient amount of an acidic gas absorbent can be attached to the porous carbon, but also pores in which an acidic gas can migrate smoothly are maintained even after the attachment of the acidic gas absorbent. In addition, when the slope (a) is equal to or more than the lower limit value, the porous carbon tends to have many mesopores and pores sized 2 nm or more and 200 nm or less.

The mass transfer coefficient attained when the relative pressure of the approximate straight line in the above range is 1.0 × 10⁻³ [in the present description, the value of this mass transfer coefficient may be referred to as mass transfer coefficient (b)] is preferably 2.0 × 10⁻⁴ sec⁻¹ or more, and usually is, but is not limited to, 1.0 × 10⁻² sec⁻¹ or less. The mass transfer coefficient (b) is more preferably 2.0 × 10⁻⁴ to 1.0 × 10⁻² sec⁻¹, 5.0 × 10⁻⁴ to 9.0 × 10⁻³ sec⁻¹, 1.0 × 10⁻³ to 8.0 × 10⁻³ sec⁻¹, 2.0 × 10⁻³ to 7.0 × 10⁻³ sec⁻¹, or 2.5 × 10⁻³ to 6.0 × 10⁻³ sec⁻¹. When the mass transfer coefficient (b) is equal to or more than the lower limit value, porous carbon tends to have a pore structure more suitable for the migration of an acidic gas when an acidic gas solid absorber is produced using the porous carbon, and therefore such an acidic gas solid absorber can exhibit an excellent acidic gas adsorption/desorption rate in a short time and a high acidic gas adsorption/desorption amount in a short time. With reference to the graph shown in Fig. 1, it is described that the mass transfer coefficient (b) is a mass transfer coefficient at a relative pressure of 1.0 × 10⁻³ (the right broken line or the right end of the arrow).

The "suitable pore structure" described above is considered to be a pore structure in which there are many pores that effectively act as migration paths of an acidic gas, openings of such pores have dimensions suitable for entering and exiting the acidic gas, a proportion of pores communicating from the opening at one end to the opening at the other end (namely, pores having an opening at one end and not closed at the other end) is high. In addition, when the migration path of the gas is relatively short or there are few structures that hinder the migration of the acidic gas in the communication portion (for example, bottlenecks and the like), it is considered that the migration speed of the acidic gas in the pores of the acidic gas solid absorber is larger and the acidic gas adsorption/desorption amount is larger.

In one preferred embodiment of the present invention, it is considered that all the pores communicate from the opening at one end to the opening at the other end.

In addition, the slope (a) is considered to correspond to the length of the path through which an acidic gas migrates for adsorption or desorption in the acidic gas solid absorber, and the larger the slope (a) is, the shorter the length of the path is considered to be. The mass transfer coefficient (b) is considered to correspond to the amount of the structure that hinders the migration of the acidic gas in the communication portion, and the larger the mass transfer coefficient (b) is, the smaller the amount of the structure that hinders the migration of the acidic gas is considered to be.

The porous carbon having the slope (a) of equal to or more than the lower limit value described above can be produced, for example, by subjecting a mixture in which a carbon source and a pore source are mixed in a highly compatible state to phase separation by heat treatment, then carbonizing the mixture to fix the phase separation structure, and removing the pore source from the resulting carbonized product. For example, in the method for producing porous carbon described later, the slope (a) can be adjusted to be equal to or more than the lower limit value or to within the above range by appropriately adjusting the temperature and time for heat-treating a mixture of a carbon source and a calcium compound to be a pore source, or by appropriately adjusting the temperature and time for heat-treating the mixture while changing the type of the carbon source. In addition, the mass transfer coefficient (b) also can be adjusted to be equal to or more than the lower limit value or to within the above range by appropriately adjusting the same conditions.

### <Bulk density>

The bulk density in porous carbon indicates the degree of development of a pore structure. When the pore volumes of pores having a pore diameter of 2 nm or more and 200 nm or less are equivalent, the pore volume having a pore diameter of more than 200 nm is larger as the bulk density is lower. It is considered that pores having a pore diameter of 2 nm or more and 200 nm or less contribute to the migration of an acidic gas and the attachment of an acidic gas absorbent to porous carbon when an acidic gas solid absorber has been produced using the porous carbon, whereas pores having a pore diameter of more than 200 nm play a role of an entrance or a migration path for an acidic gas to smoothly migrate to pores having a pore diameter of 2 nm or more and 200 nm or less when an acidic gas solid absorber has been produced using an acidic gas absorbent and porous carbon. Therefore, it is preferable that in addition to the pore volume of pores having a pore diameter of 2 nm or more and 200 nm or less, the pore volume of pores having a pore diameter of 200 nm or more is also large, that is, the bulk density is small.

In one preferred embodiment, the upper limit value of the bulk density of the porous carbon is preferably 0.17 g/cm³, and the lower limit is not particularly limited, but is usually 0.001 g/cm³ or more. The bulk density of the porous carbon is preferably 0.001 to less than 0.17 g/cm³, more preferably 0.005 to 0.15 g/cm³, still more preferably 0.006 to 0.12 g/cm³, and particularly preferably 0.01 to 0.10 g/cm³. When the bulk density is less than the upper limit value, or equal to or less than the upper limit value, in the use of porous carbon as a carrier of an acidic gas solid absorber, the acidic gas solid absorber can have an excellent acidic gas adsorption/desorption rate in a short time and a high acidic gas adsorption/desorption amount in a short time because the porous carbon tends to have a pore structure in which not only a sufficient amount of an acidic gas absorbent can be attached to the porous carbon, but also pores in which an acidic gas can migrate smoothly are maintained even after the attachment of the acidic gas absorbent. When the bulk density is equal to or more than the lower limit value, scattering can be inhibited and handleability can be improved during the use of the porous carbon as a carrier of an acidic gas solid absorber. In addition, the carbon skeleton has a certain strength or more, and can maintain the pore structure.

The bulk density can be adjusted to less than the upper limit value or to within the above range by, for example, appropriately adjusting the types and/or the proportions of the carbon source and the pore source; the type of a metal organic acid; the temperature and/or the time of the heat treatment step (phase separation step and/or carbonization step); or the like in the method for producing porous carbon described later.

The bulk density can be measured by the method described in Examples described later.

### <Specific surface area calculated by BET method>

In one preferred embodiment, the specific surface area calculated from a nitrogen adsorption isotherm of the porous carbon by the BET method is preferably 300 to 1500 m²/g, more preferably 400 to 1400 m²/g, still more preferably 450 to 1300 m²/g, and particularly preferably 500 to 1200 m²/g. When the specific surface area is within the above range, in the use of porous carbon as a carrier of an acidic gas solid absorber, the acidic gas solid absorber can have an excellent acidic gas adsorption/desorption rate in a short time and a high acidic gas adsorption/desorption amount in a short time because the porous carbon tends to have a pore structure in which not only a sufficient amount of an acidic gas absorbent can be attached to the porous carbon, but also pores in which an acidic gas can migrate smoothly are maintained even after the attachment of the acidic gas absorbent. The specific surface area can be adjusted to within the above range by, for example, appropriately adjusting the types and/or the proportions of the carbon source and the pore source; the type of a metal organic acid; the temperature and/or the time of the heat treatment step (phase separation step and/or carbonization step); or the like in the method for producing porous carbon described later. The specific surface area can be calculated from an approximate straight line of a curve in a relative pressure range of 0.05 or more and 0.1 or less obtained by measuring an adsorption isotherm of the porous carbon, and analyzing the adsorption isotherm by a multipoint method using the BET equation to obtain the curve.

### <Content of calcium>

In one preferred embodiment, the content of calcium in the porous carbon is preferably 20 to 2000 ppm, more preferably 50 to 1500 ppm, and still more preferably 100 to 1000 ppm. When the content of calcium is within the above range, an excessive increase in the mass of the porous carbon is easily inhibited, and the porous carbon tends to be superior in productivity. The content of calcium can be adjusted to within the above range, for example, by appropriately adjusting the conditions of the step of removing the pore source or the oxide derived therefrom (for example, the type and/or the concentration of the acid to be used for the acid washing, the time and/or the temperature of the acid washing, and the like) in the method for producing porous carbon described later.

### <Content of sulfur and content of silicon>

In one preferred embodiment, the contents of sulfur and silicon in the porous carbon are each preferably 1000 ppm or less, and the lower limits thereof are, but are not particularly limited to, 0 ppm. The content of sulfur in the porous carbon is preferably 0 to 1000 ppm, more preferably 0 to 900 ppm, and still more preferably 0 to 800 ppm. In one preferred embodiment, the content of silicon in the porous carbon is preferably 0 to 1000 ppm, more preferably 0 to 900 ppm, and still more preferably 0 to 800 ppm. When the contents of sulfur and silicon are equal to or less than the upper limit values or within the above ranges, an excessive increase in the mass of the porous carbon is easily inhibited, and the porous carbon tends to be superior in productivity. The contents of sulfur and silicon can be adjusted to be equal to or less than the upper limit values, or to within the above range, for example, by appropriately selecting the type of the carbon source in the method for producing porous carbon described later; and/or by appropriately adjusting the conditions of the step of removing the pore source or the oxide derived therefrom (for example, the type and/or the concentration of the acid to be used for the acid washing, the time and/or the temperature of the acid washing, and the like).

The contents of calcium, sulfur and silicon can be measured by fluorescent X-ray analysis.

### [Method for producing porous carbon]

The porous carbon of the present invention is produced by, for example, a method including:
(1) a step of obtaining a mixture comprising a carbon source and a calcium compound as a pore source;
(2) a step of heat-treating the mixture in an inert gas atmosphere to phase-separate the carbon source and the calcium compound;
(3) a step of heat-treating the phase-separated mixture in an inert gas atmosphere to obtain a carbonized product;
(4) a step of removing the calcium compound from the carbonized product to obtain porous carbon; and
(5) a step of pulverizing the porous carbon, as necessary.

### <Step (1)>

The carbon source is not particularly limited. From the viewpoint of enhancing compatibility with a calcium compound serving as a pore source, the carbon source is preferably a saccharide. Examples of the saccharide include monosaccharides such as glucose, galactose, mannose, fructose, ribose, and glucosamine; disaccharides such as sucrose, trehalose, maltose, cellobiose, maltitol, lactobionic acid, and lactosamine; and polysaccharides such as starch, cellulose, glycogen, pectin, curdlan, and guar gum. These saccharides may be used singly or two or more saccharides may be used in combination. Among these saccharides, glucose and starch are preferable from the viewpoint of easy production of porous carbon that has a suitable pore structure and easy availability in large amounts.

The starch is not particularly limited, and for example, starch derived from corn, cassava, potato, sweet potato, tapioca, bean, wheat, rice, or the like can be used. The amylose content of starch is preferably 50% by mass or less, and more preferably 30% by mass or less with respect to the mass of the starch. The lower the amylose content of starch is, the lower the gelatinization temperature tends to be. Therefore, it is preferable that the amylose content of starch is equal to or less than the upper limit value because gelatinization easily occurs at a low temperature, and compatibility with a calcium compound serving as a pore source easily increases. The amylose content can be determined, for example, by the iodine colorimetric method. The starch may also be a modified starch that has been modified. Examples of the modified starch include etherified starches, esterified starches, cationized starches, and cross-linked starches. Such starches may be used singly or two or more starches may be used in combination. When two or more starches are used in combination, the amylose content is the average amylose content of the starches combined.

The pore source is not particularly limited. From the viewpoint of easily enhancing compatibility with the carbon source, the pore source is preferably a calcium compound. The calcium compound is not particularly limited, and for example, calcium chloride, calcium hydroxide, calcium oxide, calcium carbonate, calcium acetate, calcium fluoride, calcium bromide, calcium iodide, calcium carbide, calcium hydrogencarbonate, calcium nitrate, calcium sulfate, calcium silicate, calcium phosphate, calcium pyrophosphate, calcium gluconate, and calcium lactate, and the like can be used. Among these calcium compounds, a calcium compound having a melting point of 300°C or lower (when the mixture contains water and/or a polyhydric alcohol and/or a carboxylic acid described below, the melting point of the eutectic compound of the calcium compound, the carbon source, and water and/or the polyhydric alcohol and/or the carboxylic acid is 300°C or lower) is preferable from the viewpoint of easily producing porous carbon that exhibits excellent gas diffusibility, and at least one selected from the group consisting of calcium chloride hydrate, calcium hydroxide, calcium oxide, calcium carbonate, and calcium acetate is more preferable. Calcium chloride hydrates include dihydrate, tetrahydrate, and hexahydrate, and any hydrate may be used, but the dihydrate is preferable because it has good reactivity with saccharides.

The mixture including the carbon source and the calcium compound may further include at least one selected from the group consisting of water, a polyhydric alcohol, and a carboxylic acid. When water and/or the polyhydric alcohol and/or the carboxylic acid are included in the mixture, it is considered that the carbon source and the calcium compound are compatibilized with each other via water and/or the polyhydric alcohol and/or the carboxylic acid to form a eutectic compound. Therefore, the melting point of the calcium compound having a melting point of 300°C or higher alone can be made 300°C or lower as the melting point of the eutectic compound. Therefore, the phrase "the melting point of the calcium compound is 300°C or lower" as used herein also includes "the melting point of a eutectic compound of water and/or a polyhydric alcohol and/or a carboxylic acid, a carbon source, and a calcium compound is 300°C or lower". Water is preferable from the viewpoint of easy availability. Examples of the polyhydric alcohol that can be used include glycerin, ethylene glycol, propylene glycol, polyethylene glycol, and polypropylene glycol. Among these polyhydric alcohols, glycerin and ethylene glycol are preferable from the viewpoint of easily dissolving the calcium compound and being easily available in a large amount. Examples of the carboxylic acid that can be used include formic acid, acetic acid, propionic acid, butyric acid, valeric acid, caproic acid, lactic acid, malic acid, citric acid, benzoic acid, phthalic acid, salicylic acid, oxalic acid, malonic acid, succinic acid, glutaric acid, adipic acid, fumaric acid, and maleic acid. Among these carboxylic acids, formic acid and acetic acid are preferable from the viewpoint of easily dissolving the calcium compound and being easily available in a large amount. When two or more compounds selected from among water, one or more polyhydric alcohols, and one or more carboxylic acids are mixed and used, the use ratio of the two or more compounds of water, the polyhydric alcohols, and the carboxylic acid may be appropriately changed according to desired properties of the porous carbon.

The method for mixing the carbon source and the calcium compound, and optionally water, the polyhydric alcohol and/or the carboxylic acid is not particularly limited, and the mixing may be performed by any mixing method.

The amount of the calcium compound to be mixed with the carbon source is preferably 80 to 500 parts by mass, more preferably 130 to 400 parts by mass, and still more preferably 180 to 300 parts by mass per 100 parts by mass of the carbon source. When the amount of the calcium compound is within the above range, the relationship between the mass transfer coefficient and the relative pressure of the resulting porous carbon, and the pore volume of the resulting porous carbon can be rendered suitable.

When the mixture including the carbon source and the calcium compound further includes water and/or a polyhydric alcohol and/or a carboxylic acid, the amount of the water and/or the polyhydric alcohol and/or the carboxylic acid (when two or more selected from among water, one or more polyhydric alcohols, and one or more carboxylic acids are used, the total amount thereof is employed) is preferably 50 to 500 parts by mass, more preferably 100 to 400 parts by mass, and still more preferably 150 to 300 parts by mass per 100 parts by mass of the carbon source. It is noted that when the mixture including the carbon source and the calcium compound does not include the polyhydric alcohol and the carboxylic acid but includes water, the amount of the water is preferably 10 to 500 parts by mass, more preferably 20 to 400 parts by mass, and still more preferably 50 to 300 parts by mass per 100 parts by mass of the carbon source. When the amount of water and/or the polyhydric alcohol and/or the carboxylic acid is within the above range, a eutectic compound is likely to be generated, so that the relationship between the mass transfer coefficient and the relative pressure of the resulting porous carbon, and the pore volume of the resulting porous carbon can be rendered suitable.

### <Step (2)>

In the step (2), the mixture obtained in the step (1) is heat-treated in an inert gas atmosphere to phase-separate the carbon source and the calcium compound.

Examples of the inert gas include nitrogen, argon, and a mixture thereof. The concentration of an oxidizing gas in the gas to be used is preferably as low as possible. The concentration of the oxidizing gas, particularly oxygen, is usually 1% by volume or less, and preferably 0.1% by volume or less with respect to the volume of the gas to be used. When the concentration of the oxidizing gas is equal to or less than the upper limit value, oxidation of the mixture is inhibited, and it is easy to obtain a structure having desired characteristics. In addition, the oxidative decomposition of the generated structure can be inhibited.

The feed amount (flow amount) of the inert gas is usually 200 to 7000 mL/min, preferably 500 to 6000 mL/min, and more preferably 1000 to 5000 mL/min per 1 g of the mixture.

The heat treatment temperature is preferably 150 to 500°C, more preferably 200 to lower than 500°C, still more preferably 240 to 470°C, particularly preferably 250 to 450°C, more particularly preferably higher than 300°C to 420°C, and further particularly preferably higher than 300°C to 400°C.

The present inventors have found that the pore structure of the porous carbon in the present invention is obtained by subjecting the mixture obtained in step (1) to a heat treatment in an inert gas atmosphere, preferably at a temperature within the above range. The reason is not clear, but the following non-limiting mechanism of action is conceivable.

By the heat treatment, the carbon source and the calcium compound compatible with the carbon source due to hydrogen bonding are phase-separated from each other in the mixture starting from desorption of hydrated water from the mixture or the dehydration reaction of the carbon source. Furthermore, it is considered that as the dehydration reaction of the carbon source proceeds, the carbon source is hardened, and the structure in a state where the carbon source and the calcium compound are phase-separated is fixed. At this time, at least a part of the phase-separated calcium compound (preferably 50% by mass or more, more preferably almost all, or all of the phase-separated calcium compound) is continuously, three-dimensionally connected. In a subsequent carbonization step, the carbon source becomes insoluble in hot water or hot acid as a result of aromatization (carbonization), and in a subsequent calcium compound removal step, the calcium compound is removed from the carbonized product (preferably by washing with an acid). Since the trace resulting from the removal of the calcium compound becomes pores, it is considered that the pore structure of the porous carbon in the present invention is obtained via the phase separation of the calcium compound by the heat treatment.

The temperature-raising rate in the heat treatment step is preferably 2°C/min or more, and the upper limit value thereof is not particularly limited, but is preferably 200°C/min or less from the viewpoint of easily realizing uniform heat treatment. The temperature-raising rate in the heat treatment step is preferably 2 to 200°C/min, more preferably 5 to 200°C/min, and still more preferably 10 to 200°C/min. When the temperature-raising rate is equal to or more than the lower limit value, it is easy to obtain a desired pore volume and/or a desired mass transfer coefficient.

The heat treatment time is appropriately chosen according to the heat treatment temperature, the feed amount of the inert gas, and the like. The heat treatment time is, for example, 0.1 to 24 hours, preferably 0.2 to 24 hours, more preferably 0.3 to 12 hours, and still more preferably 0.5 to 8 hours. When the heat treatment time is equal to or more than the lower limit value, phase separation tends to sufficiently proceed. It is preferable that the heat treatment time is equal to or less than the upper limit value because it is an appropriate time from the viewpoint of economic efficiency.

As apparatuses to be used for the heat treatment, various furnaces such as a rotary kiln, a fluidized bed furnace, a fixed bed furnace, a moving bed furnace, and a moving floor furnace, and various dryers such as a spray dryer, a mobile dryer, a stirring type dryer, a roll type dryer, and a thin film evaporator can be used. In addition, either a continuous furnace or a continuous dryer that continuously performs the feeding of the substance to be subjected to the heat treatment and the taking out of the substance after the heat treatment, or a batch furnace or a batch dryer that discontinuously performs the feeding of the substance to be subjected to the heat treatment and the taking out of the substance after the heat treatment may be used. The heating means may be any means capable of heating to a prescribed temperature, and may be, for example, electric heating, gas combustion type heating, microwave heating, high-frequency induction heating, and energized heating. These heating means may be used singly or in combination.

### <Step (3)>

In the step (3), the mixture phase-separated in the step (2) is subjected to a heat treatment in an inert gas atmosphere to be carbonized.

The heat treatment temperature is preferably 500 to 1300°C, more preferably higher than 550°C to 1200°C, still more preferably 600 to 1100°C, and particularly preferably 650 to 1000°C. When the heat treatment temperature is within the above range, the resulting porous carbon is likely to have a proper volume of pores sized 2 nm or more and 200 nm or less, and in the use of the porous carbon as a carrier of an acidic gas solid absorber, it is possible to obtain porous carbon having a pore structure in which not only a sufficient amount of an acidic gas absorbent can be attached to the porous carbon, but also pores in which an acidic gas can migrate smoothly are maintained even after the attachment of the acidic gas absorbent. In addition, in the subsequent step of removing a calcium compound from a carbonized product, the calcium compound is easily removed.

The heat treatment of the phase-separated mixture may be performed in multiple stages. For example, the phase-separated mixture may be heat-treated at 500 to 900°C, and then heat-treated at 900 to 1300°C. It is preferable not to perform the heat treatment in multiple stages from the viewpoint of easily obtaining porous carbon that provides an excellent acidic gas adsorption rate and acidic gas adsorption amount in a short time in an acidic gas solid absorber produced using the porous carbon. However, performing the heat treatment in multiple stages is not excluded.

The temperature-raising rate in the heat treatment step is preferably 2°C/min or more, and the upper limit value thereof is not particularly limited, but is preferably 200°C/min or less from the viewpoint of easily realizing uniform heat treatment. The temperature-raising rate in the heat treatment step is preferably 2 to 200°C/min, more preferably 5 to 150°C/min, and still more preferably 10 to 100°C/min. When the temperature-raising rate is equal to or more than the lower limit value, it is easy to obtain a desired pore volume.

The heat treatment time is appropriately chosen according to the heat treatment temperature, the feed amount of the inert gas, and the like. The heat treatment time is, for example, 0.1 to 24 hours, preferably 0.2 to 12 hours, and more preferably 0.5 to 8 hours. When the heat treatment time is equal to or more than the lower limit value, carbonization tends to sufficiently proceed. It is preferable that the heat treatment time is equal to or less than the upper limit value because it is an appropriate time from the viewpoint of economic efficiency. The heat treatment time in the case where the heat treatment is performed in multiple stages means the total heat treatment time.

As the inert gas, the feed amount thereof, and the furnace to be used for the heat treatment, those equivalent to those in the step (2) may be adopted.

The phase separation step in the step (2) and the carbonization step in the step (3) may be performed simultaneously. Productivity can thereby be increased. For example, the mixture obtained in the step (1) may be subjected to the heat treatment at 500 to 1300°C. In this case, in the course of the elevation of temperature in the carbonization step, the temperature passes through 150 to 500°C, which is a temperature at which phase separation proceeds, so that a desired pore structure can be obtained. From the viewpoint of promoting the phase separation, it is preferable to reduce the temperature-raising rate to be used until the temperature reaches the heat treatment temperature of the step (3). Specifically, the temperature-raising rate is preferably 2 to 100°C/min, more preferably 5 to 50°C/min, and still more preferably 10 to 30°C/min from the viewpoint of achieving both promotion of the phase separation structure and improvement of productivity. The heat treatment time in this case is, for example, 0.1 to 24 hours, preferably 0.2 to 12 hours, and more preferably 0.5 to 8 hours. It is noted that from the viewpoint of promoting the phase separation structure more, the phase separation step in the step (2) and the heat treatment step in the step (3) may be performed each independently.

### <Step (4)>

In the step (4), the calcium compound is removed from the carbonized product obtained. Porous carbon can thereby be obtained.

The removal of the calcium compound is preferably performed by acid washing. Examples of the acid to be used for the acid washing include hydrochloric acid, sulfuric acid, and nitric acid. Hydrochloric acid is preferable from the viewpoint of easily dissolving metal compounds in the carbonized product, hardly allowing impurities such as sulfur to remain, and easily inhibiting oxidation of the carbonized product. The concentration of the acid during the acid washing may be appropriately changed depending on the type of the acid to be used. For example, when hydrochloric acid is used, the concentration of hydrochloric acid is preferably 0.01 to 1.0 mol/L, and more preferably 0.05 to 0.5 mol/L. It is preferable that the concentration of hydrochloric acid is within the above range because metal compounds are easily removed, and hydrochloric acid hardly remains in the carbonized product.

The pH of the acid at the time of the acid washing may be appropriately changed depending on the type, concentration, temperature, and the like of the acid to be used. The pH of the acid is preferably 3 or less, and more preferably 2.5 or less. When the pH of the acid is equal to or less than the upper limit value, it is easy to remove metal compounds efficiently.

The acid washing may be performed, for example, by immersing the resulting carbonized product in the acid. When the acid washing is performed by immersion in the acid, the mass ratio of the acid to the carbonized product may be appropriately adjusted according to the type, concentration, temperature, and the like of the acid to be used. The mass of the carbonized product to be immersed with respect to the mass of the acid is preferably 2 to 50% by mass, and more preferably 5 to 30% by mass. When the mass ratio of the carbonized product to be immersed to the mass of the acid is within the above range, a sufficient cleaning effect is easily obtained.

The method for immersing the carbonized product in the acid is not particularly limited. It may be a method in which immersion is performed while an acid is continuously added, retained for a prescribed time, and then drained, or a method in which the carbonized product is immersed in the acid, retained for a prescribed time, and deliquored, and then a fresh acid is added, and such immersion and deliquoring are repeated. In addition, either a method in which the entire acid is renewed or a method in which a part of the acid is renewed may be used. In addition, the acid may be stirred during immersion.

The atmosphere in which the acid washing is performed is not particularly limited, and may be appropriately selected according to the method to be used for washing. The acid washing is usually conducted in an air atmosphere.

The time for immersing the carbonized product in the acid can be appropriately adjusted according to the acid to be used, the treatment temperature, and the like. The time for immersing the carbonized product in the acid is preferably 1 to 60 minutes, more preferably 1 to 40 minutes, and still more preferably 1 to 35 minutes. When the time is equal to or more than the lower limit value, metal compounds are easily removed sufficiently, whereas when the time is equal to or less than the upper limit value, good productivity can be secured.

After the acid washing of the carbonized product, the acid in the porous carbon is preferably removed by water washing. The acid washing and the water washing may be repeatedly performed until the calcium compound in the porous carbon can be removed to a desired degree. In addition, the temperature of the solution at the time of acid washing and water washing is preferably as high as possible from the viewpoint of the efficiency of removing the calcium compound and the residual acid, and is usually 60°C or higher.

As one embodiment of the present invention, when the heat treatment of the phase-separated mixture is performed in multiple stages, acid washing may be performed during the multiple-stage heat treatment. For example, the mixture phase-separated in the step (2) may be heat-treated (for example, at 500 to 900°C), then acid-washed, and then heat-treated (for example, at 900 to 1300°C).

The porous carbon after the acid washing and the water washing may be subjected to a drying treatment using a publicly-known dryer such as a hot air dryer or a vacuum dryer. The drying is preferably performed at a temperature of 50 to 150°C. It is preferable that the drying temperature is within this range because oxidation of the porous carbon hardly occurs, and drying proceeds appropriately.

The porous carbon after the step (4) may be pulverized, as necessary. By the pulverization, the shape, particle diameter, and so on of the finally obtained porous carbon can be controlled to a desired shape, particle diameter, and so on. The pulverization method is not particularly limited. For example, publicly-known pulverizers such as a ball mill, a centrifugal roll mill, a ring roll mill, a centrifugal ball mill, a jet mill, a cone crusher, a double roll crusher, a disk crusher, and a rotary crusher may be used singly or in combination.

The method for producing porous carbon may further include a classification step after the pulverization step. For example, porous carbon having a narrow particle size distribution width can be obtained by removing particles that are extremely smaller or larger than a desired particle diameter. The classification method is not particularly limited. Examples of the classification method include classification using a sieve, wet classification, and dry classification. Examples of a wet classifier include classifiers using such principles as gravity classification, inertial classification, hydraulic classification, and centrifugal classification. Examples of a dry classifier include classifiers using such principles as sedimentation classification, mechanical classification, and centrifugal classification. From the viewpoint of economic efficiency, it is preferable to use a dry classifier.

To prevent oxidation of the surface during pulverization, the pulverization step and the classification step are preferably performed in an inert gas atmosphere.

The pulverization and the classification may be performed using a single apparatus. For example, the pulverization and the classification can be performed using a jet mill equipped with a dry classification function. Furthermore, an apparatus in which a pulverizer and a classifier are independent from each other may be used. In this case, the pulverization and the classification may be continuously performed, but the pulverization and the classification may also be discontinuously performed.

In another embodiment, the porous carbon of the present invention can be produced by, for example, a method including:
(1) a step of obtaining a mixture comprising a carbon source and an alkaline earth metal oxide as a pore source, or preparing a metal organic acid;
(2) a step of heat-treating the mixture or metal organic acid in an inert gas atmosphere to obtain a carbonized product;
(3) a step of removing the alkaline earth metal oxide from the carbonized product in the case of using the carbon source and the alkaline earth metal oxide, and . removing a metal oxide from the carbonized product in the case of using the metal organic acid, thereby obtaining porous carbon; and
(4) a step of pulverizing the porous carbon, as necessary.

### <Step (1)>

Preferably, the carbon source is not particularly limited. As the carbon source, various organic polymers, thermoplastic resins, and thermosetting resins can be used, and specific examples thereof include various synthetic resins or polymers such as polyvinyl alcohol, aliphatic or aromatic polyester-based resins, polyolefin-based resins, acrylic resins, styrene-based resins, polyamide-based resins, polyacrylonitrile-based resins, and elastomers mainly composed of polybutadiene and/or polyisoprene, thermoplastic resin polymers such as natural rubber and petroleum resins, and thermosetting resins such as phenol-based resins, furan-based resins, epoxy-based resins, and alkyd-based resins. These resins or polymers may be used singly or two or more resins or polymers may be used in combination. Among them, polyvinyl alcohol is preferable from the viewpoint of being able to adjust the pore volume.

The pore source (template particle) is not particularly limited. Examples of the pore source include alkaline earth metal oxides. Examples of the alkaline earth metal include magnesium, calcium, strontium, and barium, and among these, magnesium and calcium are preferable, and magnesium is best.

The shape and size of the pore source are not particularly limited. The shape may be, for example, particulate, scaly, layered, or the like, but is preferably particulate. At this time, the average particle size (diameter) of the pore source is preferably 3 to 300 nm, more preferably 5 to 200 nm, still more preferably 7 to 100 nm, further preferably 8 to 50 nm, and particularly preferably 9 to 30 nm.

The method for mixing the carbon source and the alkaline earth metal oxide is not particularly limited, and these materials can be mixed by any mixing method.

The amount of the alkaline earth metal oxide to be mixed with the carbon source is preferably 50 to 300 parts by mass, more preferably 80 to 250 parts by mass, and still more preferably 90 to 150 parts by mass per 100 parts by mass of the carbon source. When the amount of the alkaline earth metal oxide is within the above range, the relationship between the mass transfer coefficient and the relative pressure of the resulting porous carbon, and the pore volume of the resulting porous carbon can be rendered suitable.

Instead of the mixture containing the carbon source and the alkaline earth metal oxide, a metal organic acid, which has both a carbon source and a pore source, may be used. Here, examples of the metal organic acid include magnesium citrate, magnesium oxalate, calcium citrate, and calcium oxalate. The metal organic acid may be either a hydrate or an anhydride.

### <Step (2)>

In the step (2), the mixture obtained in the step (1) or the metal organic acid is subjected to a heat treatment in an inert gas atmosphere to afford a carbonized product.

Examples of the inert gas include nitrogen, argon, and a mixture thereof. The concentration of an oxidizing gas in the gas to be used is preferably as low as possible. The concentration of the oxidizing gas, particularly oxygen, is usually 1% by volume or less, and preferably 0.1% by volume or less with respect to the volume of the gas to be used. When the concentration of the oxidizing gas is equal to or less than the upper limit value, oxidation of the mixture is inhibited, and it is easy to obtain a structure having desired characteristics. In addition, the oxidative decomposition of the generated structure can be inhibited.

The feed amount (flow amount) of the inert gas is usually 200 to 7000 mL/min, preferably 500 to 6000 mL/min, and more preferably 1000 to 5000 mL/min per 1 g of the mixture.

The heat treatment temperature is preferably 500 to 1300°C, more preferably higher than 550°C to 1200°C, still more preferably 600 to 1100°C, and particularly preferably 650 to 1000°C.

By subjecting the mixture obtained in the step (1) or the metal organic acid to a heat treatment in an inert gas atmosphere, preferably at a temperature within the above range, the relationship between the mass transfer coefficient and the relative pressure, and the pore volume of the resulting porous carbon can be rendered suitable. In addition, in the subsequent step of removing a metal oxide from the carbonized product, the metal oxide is easily removed.

The temperature-raising rate in the heat treatment step is preferably 2°C/min or more, and the upper limit value thereof is not particularly limited, but is preferably 200°C/min or less from the viewpoint of easily realizing uniform heat treatment. The temperature-raising rate in the heat treatment step is preferably 2 to 200°C/min, more preferably 5 to 150°C/min, and still more preferably 10 to 100°C/min. When the temperature-raising rate is equal to or more than the lower limit value, it is easy to obtain a desired pore volume.

The heat treatment time is appropriately chosen according to the heat treatment temperature, the feed amount of the inert gas, and the like. The heat treatment time is, for example, 0.1 to 24 hours, preferably 0.2 to 12 hours, and more preferably 0.5 to 8 hours. When the heat treatment time is equal to or more than the lower limit value, carbonization tends to sufficiently proceed. It is preferable that the heat treatment time is equal to or less than the upper limit value because it is an appropriate time from the viewpoint of economic efficiency.

As apparatuses to be used for the heat treatment, various furnaces such as a rotary kiln, a fluidized bed furnace, a fixed bed furnace, a moving bed furnace, and a moving floor furnace, and various dryers such as a spray dryer, a mobile dryer, a stirring type dryer, a roll type dryer, and a thin film evaporator can be used. In addition, either a continuous furnace or a continuous dryer that continuously performs the feeding of the substance to be subjected to the heat treatment and the taking out of the substance after the heat treatment, or a batch furnace or a batch dryer that discontinuously performs the feeding of the substance to be subjected to the heat treatment and the taking out of the substance after the heat treatment may be used. The heating means may be any means capable of heating to a prescribed temperature, and may be, for example, electric heating, gas combustion type heating, microwave heating, high-frequency induction heating, and energized heating. These heating means may be used singly or in combination.

### <Step (3)>

In the step (3), the metal oxide is removed from the carbonized product obtained. Porous carbon can thereby be obtained.

The removal of the metal oxide is preferably performed by acid washing. Examples of the acid to be used for the acid washing include common inorganic acids such as hydrochloric acid, sulfuric acid, nitric acid, and acetic acid. The concentration of the acid during the acid washing may be appropriately changed depending on the type of the acid to be used. For example, the concentration of the acid is preferably 0.01 to 2 mol/L, and more preferably 0.05 to 1 mol/L. It is preferable that the concentration of the acid is within the above range because the metal oxide is easily removed, and the acid hardly remains in the carbonized product.

The pH of the acid at the time of the acid washing may be appropriately changed depending on the type, concentration, temperature, and the like of the acid to be used. The pH of the acid is preferably 3 or less, and more preferably 2.5 or less. When the pH of the acid is equal to or less than the upper limit value, it is easy to remove the metal oxide efficiently.

The acid washing may be performed, for example, by immersing the resulting carbonized product in the acid. When the acid washing is performed by immersion in the acid, the mass ratio of the acid to the carbonized product may be appropriately adjusted according to the type, concentration, temperature, and the like of the acid to be used. The mass of the carbonized product to be immersed with respect to the mass of the acid is preferably 2 to 50% by mass, and more preferably 5 to 30% by mass. When the mass ratio of the carbonized product to be immersed to the mass of the acid is within the above range, a sufficient cleaning effect is easily obtained.

The method for immersing the carbonized product in the acid is not particularly limited. It may be a method in which immersion is performed while an acid is continuously added, retained for a prescribed time, and then drained, or a method in which the carbonized product is immersed in the acid, retained for a prescribed time, and deliquored, and then a fresh acid is added, and such immersion and deliquoring are repeated. In addition, either a method in which the entire acid is renewed or a method in which a part of the acid is renewed may be used. In addition, the acid may be stirred during immersion.

The atmosphere in which the acid washing is performed is not particularly limited, and may be appropriately selected according to the method to be used for washing. The acid washing is usually conducted in an air atmosphere.

The time for immersing the carbonized product in the acid can be appropriately adjusted according to the acid to be used, the treatment temperature, and the like. The time for immersing the carbonized product in the acid is preferably 1 to 60 minutes, more preferably 1 to 40 minutes, and still more preferably 1 to 35 minutes. When the time for immersing the carbonized product in the acid is equal to or more than the lower limit value, the metal oxide is easily removed sufficiently, and when the time is equal to or less than the upper limit value, good productivity can be secured.

After the acid washing of the carbonized product, the acid in the porous carbon is preferably removed by water washing. The acid washing and the water washing may be repeatedly performed until the metal oxide in the porous carbon can be removed to a desired degree. In addition, the temperature of the solution at the time of acid washing and water washing is preferably as high as possible from the viewpoint of the efficiency of removing the metal oxide and the residual acid, and is usually 60°C or higher.

The porous carbon after the acid washing and the water washing may be subjected to a drying treatment using a publicly-known dryer such as a hot air dryer or a vacuum dryer. The drying is preferably performed at a temperature of 50 to 150°C. It is preferable that the drying temperature is within this range because oxidation of the porous carbon hardly occurs, and drying proceeds appropriately.

The porous carbon after the step (3) may be pulverized, as necessary. By the pulverization, the shape, particle diameter, and so on of the finally obtained porous carbon can be controlled to a desired shape, particle diameter, and so on. The pulverization method is not particularly limited. For example, publicly-known pulverizers such as a ball mill, a centrifugal roll mill, a ring roll mill, a centrifugal ball mill, a jet mill, a cone crusher, a double roll crusher, a disk crusher, and a rotary crusher may be used singly or in combination.

The method for producing porous carbon may further include a classification step after the pulverization step. For example, porous carbon having a narrow particle size distribution width can be obtained by removing particles that are extremely smaller or larger than a desired particle diameter. The classification method is not particularly limited. Examples of the classification method include classification using a sieve, wet classification, and dry classification. Examples of a wet classifier include classifiers using such principles as gravity classification, inertial classification, hydraulic classification, and centrifugal classification. Examples of a dry classifier include classifiers using such principles as sedimentation classification, mechanical classification, and centrifugal classification. From the viewpoint of economic efficiency, it is preferable to use a dry classifier.

To prevent oxidation of the surface during pulverization, the pulverization step and the classification step are preferably performed in an inert gas atmosphere.

The pulverization and the classification may be performed using a single apparatus. For example, the pulverization and the classification can be performed using a jet mill equipped with a dry classification function. Furthermore, an apparatus in which a pulverizer and a classifier are independent from each other may be used. In this case, the pulverization and the classification may be continuously performed, but the pulverization and the classification may also be discontinuously performed.

### <Acidic gas solid absorber>

The porous carbon of the present invention can be suitably used as a carrier of an acidic gas solid absorber due to the characteristic pore structure of the porous carbon. Therefore, the present invention is also directed to an acidic gas solid absorber comprising the porous carbon of the present invention and an acidic gas absorbent, wherein the acidic gas absorbent is attached to the porous carbon. Examples of the acidic gas include carbon dioxide, SOₓ, and NOₓ. Examples of the acidic gas absorbent corresponding thereto include amine compounds; Cu-Zr-based complex oxides; Fe-Zr-based complex oxides; Ni-Zr-based complex oxides; and agents containing, as main components, at least one selected from the group consisting of oxides of Li, Na, K, Rb, Cs, Ca, Mg, Sr, and Ba, and at least one selected from the group consisting of oxides of Ti, Si, Al, and Zr. These acidic gas absorbents may be used singly or two or more acidic gas absorbents may be used in combination. The porous carbon of the present invention can allow an acidic gas absorbent to be sufficiently attached thereto, and in the acidic gas solid absorber of the present invention, an acidic gas can smoothly migrate inside the pores though a sufficient amount of the acidic gas absorbent is attached. Therefore, the acidic gas solid absorber of the present invention can achieve an excellent acidic gas adsorption/desorption rate in a short time and a high acidic gas adsorption/desorption amount in a short time.

The amine compound is not particularly limited. Since an amine group reacts with carbon dioxide, any amine compound can be used. Particularly, those having high reactivity with carbon dioxide are preferable, and for example, those containing as many primary, secondary, and tertiary amine groups as possible in one molecule are more preferable. In addition, in the present invention, it is assumed that carbon dioxide is adsorbed to the amine compound and then decomposed and released, and the carbon dioxide solid absorber is repeatedly used. Therefore, in order to prevent the amine compound from being desorbed at the time of decomposition and release of carbon dioxide, a compound having a high boiling point to some extent is preferable. From these viewpoints, an amine compound having a molecular weight of 110 or less per N atom and a boiling point of 100°C or higher is suitable. Among amine compounds having a boiling point of lower than 100°C and having a molecular weight of 110 or less per N atom, there are many amine compounds having strong odor and toxicity, such as ethylamine (boiling point: 38°C, molecular weight per N atom: 45.1), triethylamine (boiling point: 89.7°C, molecular weight per N atom: 101), isopropylamine (boiling point: 32.4°C, molecular weight per N atom: 59.4), and t-butylamine (boiling point: 45.0°C, molecular weight per N atom: 73.1), and such amine compounds are often inappropriate for the present invention. From these viewpoints, an amine compound having a molecular weight of 110 or less per N atom and a boiling point of 100°C or higher is preferable. Preferable examples of such amine compounds include monoethanolamine, diisopropanolamine, diethanolamine, and βamineethylethanolamine as alkanolamines, and include triethylenediamine, triethylenepentamine, tetraethylenepentamine, pentaethylenehexamine, triethylenetetraamine, linear polyethyleneimine, branched polyethyleneimine, polyvinylamine, and chitosan as ethyleneamines. Examples of aliphatic amines include hexamethylenediamine and iminobispropylamine, and examples of alicyclic amines include imidazole and piperazine. These amine compounds may be used singly, or two or more of them may be used in combination. The amine attachment ratio in the carrier for a solid absorber is preferably 15 to 70% by mass based on the total mass of the carrier for the solid absorber and the amine. It is preferable that the amine attachment ratio is within the above range because a sufficient amount of amine is attached, and a large amount of amine functioning as a carbon dioxide absorbent is present, so that the resulting acidic gas solid absorber can be used as a solid absorber with high utilization efficiency.

The method for attaching the amine to the porous carbon for the solid absorber carrier is not particularly limited. As a publicly-known suitable method, a solid absorber can be prepared, for example, by a method in which a solution in which an amine compound is dissolved in an appropriate solvent is sprinkled in a spray form on porous carbon, or a method in which porous carbon for a solid absorber carrier is immersed in an aqueous solution of an amine compound to sufficiently adsorb the amine, followed by drying.

In one embodiment, a method is preferable in which porous carbon is immersed in an aqueous solution of an amine compound to sufficiently adsorb the amine, and then the porous carbon is dried under reduced pressure to prepare a solid absorber.

The method for attaching an acidic gas absorbent other than the amine compound to the porous carbon for a solid absorber carrier is not particularly limited. As a publicly-known suitable method, a solid absorber can be prepared, for example, by a method in which a solution in which an acidic gas absorbent is dissolved in an appropriate solvent or a dispersion liquid in which an acidic gas absorbent is dispersed in an appropriate solvent is sprinkled in a spray form on porous carbon, or a method in which porous carbon for a solid absorber carrier is immersed in an aqueous solution of an acidic gas absorbent or a dispersion liquid of an acidic gas absorbent to sufficiently adsorb the acidic gas absorbent, followed by drying.

### <Method for separating and capturing acidic gas>

The present invention is also directed to a method for separating and capturing an acidic gas using the acidic gas solid absorber. The method of the present invention comprises: an absorption step of bringing a gas to be treated into contact with a solid absorber to absorb an acidic gas; and a desorption step of desorbing (releasing) the acidic gas absorbed in the absorption step from the acidic gas solid absorber. The desorption step includes subjecting the acidic gas solid absorber to at least one or more selected from the group consisting of (A) depressurization; (B) contact with an inert gas containing no acidic gas; and (C) heating.

The gas to be treated contains an acidic gas. In the absorption step, the acidic gas content in the gas to be treated and the temperature are not particularly limited as long as the acidic gas solid absorber can withstand the conditions, but for example, the acidic gas partial pressure may be 100 kPa or less and the temperature may be 20 to 60°C. When the acidic gas is carbon dioxide, examples of the above conditions specifically include use conditions assumed for a thermal power plant or the like (carbon dioxide partial pressure: 7 to 100 kPa, temperature: 40 to 60°C), use conditions assumed for a space station or the like (carbon dioxide partial pressure: 0 to 1 kPa, temperature: 20 to 25°C). The gas to be treated may be at atmospheric pressure or pressurized.

In the method of the present invention, owing to the use of the solid absorber, in particular, an excellent acidic gas adsorption rate in a short time and a high acidic gas adsorption amount in a short time can be achieved. In the method of the present invention, it is very useful that the solid absorber of the present invention has an excellent acidic gas adsorption rate in a short time and a high acidic gas adsorption amount in a short time from the viewpoint of efficiently absorbing an acidic gas from a gas to be treated.

When the acidic gas is desorbed from the acidic gas solid absorber by conducting (A) depressurization in the desorption step, the pressure is preferably reduced to approximately 0.01 to 0.5 Pa, and from the viewpoint of the desorption amount of the acidic gas and the stability of the acidic gas solid absorber, the pressure is preferably reduced to 0.01 to 0.25 Pa. The acidic gas solid absorber or the container containing the same may be heated at the time of depressurization. The temperature in the case of heating may be approximately 20 to 60°C, and the pressure in this case is preferably reduced to 0.01 to 0.55 Pa. When the acidic gas is desorbed from the acidic gas solid absorber by conducting depressurization, the temperature of the gas to be treated is preferably 20 to 60°C, and the acidic gas partial pressure is preferably 100 kPa or less.

When in the desorption step, the acidic gas is desorbed from the acidic gas solid absorber by (B) contact with an inert gas containing no acidic gas, the acidic gas partial pressure can be lowered and the acidic gas can be desorbed by bringing the inert gas containing no acidic gas into contact. Examples of the inert gas include argon and nitrogen.

When the acidic gas is desorbed from the acidic gas solid absorber by conducting (C) heating in the desorption step, the acidic gas can be desorbed by increasing the temperature from the temperature at the time of the acidic gas absorption. In this case, as to the temperature at the time of the acidic gas absorption and the temperature at the time of the acidic gas desorption, for example, the temperature at the time of the acidic gas absorption may be 10 to 40°C or 20 to 25°C, and the temperature at the time of the acidic gas desorption may be approximately 60°C to 90°C.

The solid absorber of the present invention is excellent particularly in the acidic gas desorption rate in a short time and can have a high acidic gas desorption amount due to the fact that the solid absorber has a pore structure in which not only a sufficient amount of an acidic gas absorbent can be attached to the porous carbon, but also pores in which an acidic gas can migrate smoothly are maintained even after the attachment of the acidic gas absorbent. In the method of separating and capturing an acidic gas, it is usually assumed that the separation and the capture are repeatedly conducted. From the viewpoint of efficiency in the separation and the capture of the acidic gas, it is very useful that the method is excellent in the desorption rate in a short time and the desorption amount is large.

### <Acidic gas separation and capture system>

The present invention is also directed to an acidic gas separation and capture system comprising the acidic gas solid absorber described above. The acidic gas separation and capture system is not particularly limited except that the solid absorber in the present invention is used.

Examples of the acidic gas separation and capture system comprising the solid absorber include a fixed bed type acidic gas separation and capture system in which a gas to be treated is alternately introduced into two vessels filled with a solid absorber, and absorption of an acidic gas and regeneration of the solid absorber are alternately performed to continuously capture the acidic gas, and a moving bed type acidic gas separation and capture system in which a solid absorber moves in the system by a conveyor, a honeycomb rotor/container, or the like, absorbs an acidic gas from the gas to be treated in an absorption zone, releases the acidic gas absorbed in a regeneration zone, and captures the released acidic gas.

One embodiment of the fixed bed type acidic gas separation and capture system is a semi-batch processing apparatus including three columns and taking charge of three processes of absorption, washing, and regeneration by switching the columns to each other. Focusing on one of the columns, first, in the absorption step, the gas to be treated is fed to the column, and the acidic gas is absorbed. At the same time, the washing step is being conducted in another column, and an acidic gas is fed to the column. As a result, the gas to be treated remaining in particle gaps in the column is swept away, so that the purity of the acidic gas of the captured gas in the regeneration step is increased. Then, in the remaining column, the regeneration step is conducted, and the acidic gas solid absorber is subjected to desorption of the acidic gas by one or more selected from the group consisting of (A) depressurization, (B) contact with an inert gas containing no acidic gas, and (C) heating. The three columns switch the process at regular time intervals while taking charge of the process so as not to overlap each other. As a result, continuous acidic gas capture is realized as a whole while each column is a batch operation.

In the fixed bed type acidic gas separation and capture system, the form and use of the solid absorber are not particularly limited, but the solid absorber is preferably in a form that can be filled in the fixed bed, such as a granular form, a honeycomb form, or a plate form.

The moving bed type acidic gas separation and capture system includes an absorption vessel, a desorption vessel, and a moving means that conveys a solid absorber from the outlet of the desorption vessel to the inlet of the absorption vessel. The absorption vessel includes a feed port for introducing the solid absorber into the absorption vessel, a discharge port for discharging the solid absorber having absorbed an acidic gas from the absorption vessel, a feed port for introducing a gas to be treated into the absorption vessel, and a discharge port for discharging the treated gas (off-gas) resulting from separation and removal of the acidic gas from the absorption vessel. The desorption vessel includes a feed port for feeding the solid absorber having absorbed the acidic gas to the desorption vessel, a discharge port for discharging the solid absorber from which the acidic gas has been separated and captured from the fed solid absorber from the desorption vessel, and a discharge port for discharging the acidic gas separated from the solid absorber from the desorption vessel. The desorption vessel includes one or more facilities selected from the group consisting of a facility for depressurizing the inside of the vessel, a facility for introducing an inert gas containing no acidic gas into the vessel, and a facility for heating the inside of the vessel. In correspondence with these facilities, in the desorption vessel, the acidic gas solid absorber is subjected to one or more selected from the group consisting of (A) depressurization; (B) contact with an inert gas containing no acidic gas; and (C) heating. The facility for depressurizing the inside of the vessel includes, for example, a vacuum pump and an intake port connected to the vacuum pump and provided in the desorption vessel. The facility for introducing an inert gas containing no acidic gas into the vessel includes, for example, an inert gas cylinder, an inert gas introduction port connected to the inert gas cylinder and provided in the desorption vessel, and a discharge port for discharging the inert gas having been brought into contact with the acidic gas solid absorber from the desorption vessel. The facility for heating the inside of the desorption vessel includes, for example, a heater.

One embodiment of the moving bed type acidic gas separation and capture system includes a hopper, an absorption column in which an absorption step is conducted, a desorption column (regeneration column) in which a desorption step is conducted, a drying column in which a solid absorber is dried, a cooling column in which the solid absorber is cooled, which are arranged in order downward in the vertical direction, and a conveyor which conveys the solid absorber from the cooling column to the hopper. The acidic gas solid absorber accommodated in the hopper moves by its own weight in the order of the absorption column, the desorption column, the drying column, and the cooling column, and is conveyed from the cooling column to the hopper by the conveyor. In the absorption column and the desorption column, a moving bed is formed by the acidic gas solid absorber that descends in the columns and a gas that ascends in each treatment column (see, for example, JP-A-2013-121562).

Another embodiment of the moving bed type acidic gas separation and capture system includes: an absorption vessel inside which a moving bed is formed by a solid absorber; and a desorption vessel inside which a moving bed is formed by the solid absorber having passed through the absorption vessel, wherein a gas-to-be-treated feed port through which a gas to be treated containing an acidic gas is provided in a lower portion of the absorption vessel, an off-gas discharge port through which an off-gas resulting from absorption and removal of the acidic gas by the solid absorber is discharged is provided in an upper portion of the absorption vessel, a water vapor feed port through which water vapor for desorption is fed is provided in a lower portion of the desorption vessel, and an acidic gas discharge port through which the acidic gas desorbed from the solid absorber is discharged is provided in an upper portion of the desorption vessel (see, for example, JP-A-2018-187574).

As still another embodiment of the moving bed type acidic gas separation and capture system, in a system including a rotary honeycomb rotor as a means for moving a solid absorber, the honeycomb rotor carrying the solid absorber rotates in a casing partitioned into an absorption zone and a desorption zone and sealed. In the absorption zone, a gas to be treated is caused to pass through the honeycomb rotor, and an acidic gas is absorbed by the solid absorber carried on the honeycomb rotor, whereby the acidic gas is removed from the gas to be treated. The honeycomb rotor moves to a desorption zone by rotation of the rotor, and the acidic gas having been absorbed by the solid absorber is desorbed. In the desorption vessel, the acidic gas solid absorber is subjected to one or more selected from the group consisting of (A) depressurization; (B) contact with an inert gas containing no acidic gas; and (C) heating, whereby the acidic gas is desorbed from the solid absorber. The absorption and desorption treatments are conducted continuously as the rotor continues to rotate.

The system including the rotary honeycomb rotor as a means for moving a solid absorber includes a honeycomb rotor, a casing, a gas circulation circuit, and at least one or more selected from the group consisting of a gas heater, a saturated steam generator, a depressurizer, and an inert gas feeder, wherein the solid absorber is carried on the honeycomb rotor.

Examples of the system including a rotary honeycomb rotor include the systems described in JP 7036414 B2, JP-A2019-171256, and the like.

For example, in an existing system including a rotary honeycomb rotor as a means for moving a solid absorber, the rotation time of the honeycomb rotor and the passing time of the absorption and desorption zones vary depending on the diameter and volume of the honeycomb rotor. In one embodiment, the honeycomb rotor makes one revolution in about 3 to 5 minutes. The rotating honeycomb rotor passes through the absorption zone in about 30 seconds to 180 seconds.

The honeycomb rotor itself may be manufactured by, for example, corrugating non-combustible paper such as ceramic paper or metal. The solid absorber may be carried by applying or spraying a dispersion containing the solid absorber and a binder to the honeycomb rotor.

The porous carbon of the present invention can be sufficiently attached with an acidic gas absorbent, and the acidic gas solid absorber of the present invention maintains pores through which the acidic gas can smoothly migrate in the pores though a sufficient amount of the acidic gas absorbent is attached. Therefore, the acidic gas separation and capture system including the solid absorber of the present invention can achieve, in particular, an excellent acidic gas adsorption/desorption rate in a short time and a high acidic gas adsorption/desorption amount in a short time.

### Examples

Hereinafter, the present invention is described specifically by way of Examples, but these do not limit the scope of the present invention.

### [Analysis methods]

### <Volume of pores sized 2 nm or more and 200 nm or less determined by nitrogen adsorption method>

For the porous carbon or solid absorber, an adsorption isotherm obtained by measuring an adsorption amount of nitrogen was analyzed by the BJH method, and the volume of pores having a pore size (pore diameter) of 2 nm or more and 200 nm or less was calculated.

### <Volume of pores sized 2 nm or less determined by nitrogen adsorption method>

For the porous carbon or solid absorber, an adsorption isotherm obtained by measuring an adsorption amount of nitrogen was analyzed by the QS-DFT method, and the volume of pores having a pore size (pore diameter) of 2 nm or less was calculated as a micropore volume.

The ratio of the pore volume of pores having a pore diameter of 2 nm or less calculated by the QS-DFT method to the sum of the pore volume of pores having a pore diameter of 2 nm or more and 200 nm or less calculated by the BJH method and the pore volume of pores having a pore diameter of 2 nm or less calculated by the QS-DFT method (namely, the micropore ratio) was calculated using the following equation. [Math 2] $Micropore ratio \left(%\right) = \frac{Volume of pores sized 2 nm or less}{\begin{matrix}Volume of pores sized 2 nm or more and 200 nm or less \\ + volume of pores sized 2 nm or less\end{matrix}} \times 100$

### <Mass transfer coefficient by nitrogen adsorption method>

Porous carbon as a measurement sample was filled in a sample tube. The sample tube was placed in "Autosorb-iQ-MP" manufactured by Quantachrome Instruments, Inc., and once depressurized in a state of being cooled to -196°C, and then the measurement sample was allowed to adsorb nitrogen (purity: 99.999%) at a prescribed relative pressure. The amount of the nitrogen adsorbed to the sample when the equilibrium pressure was reached at each prescribed relative pressure was measured, and an adsorption isotherm was produced.

A mass transfer coefficient was determined by analyzing the data of the produced nitrogen adsorption isotherm. Specifically, the change in pressure of nitrogen until reaching the adsorption equilibrium at each prescribed relative pressure was converted into a mass transfer coefficient using LDF approximation. At this time, the conversion into a mass transfer coefficient was conducted such that the number of plots in the relative pressure range of 1.0 × 10⁻⁴ or more and 1.0 × 10⁻³ or less was at least five.

A graph was produced with the relative pressure (P/P₀) on the x-axis and the mass transfer coefficient on the y-axis. An approximate straight line was drawn in the relative pressure range of 1.0 × 10⁻⁴ or more and 1.0 × 10⁻³ or less, and the slope (a) thereof was determined.

### <Bulk density>

The bulk density was measured using Powder Tester PT-X manufactured by Hosokawa Micron Corporation. A sample was charged into an automatic tapped density measurement unit, and the bulk density was calculated from the volume after 3000 taps.

### <Production of porous carbon>

### [Example 1]

1.0 g of glucose (sold by FUJIFILM Wako Pure Chemical Corporation), 3 g (300 parts by mass per 100 parts by mass of glucose) of calcium chloride dihydrate, and 1.5 g (150 parts by mass per 100 parts by mass of glucose) of ion-exchanged water were mixed. The resulting mixture was heated to 700°C at a temperature-raising rate of 10°C/min under a nitrogen gas flow of 1250 mL/min per gram of the mixture, and heat-treated at that temperature for 60 minutes, affording a carbonized product. The carbonized product was washed by immersion in 0.1 mol/L hydrochloric acid and stirring at 80°C for 30 minutes, and then removed onto a Buchner funnel. Washing with water was performed until the pH of the filtrate was in the range of 6 to 8. Acid washing and water washing were repeated three times, followed by hot air drying at 80°C, thereby affording particulate porous carbon 1.

### [Example 2]

Particulate porous carbon 2 was obtained in the same manner as in Example 1 except that changes were made as described in Table 1.

### [Example 3]

One gram of polyvinyl alcohol (PVA: KURARAY POVAL 28-98, manufactured by KURARAY Co., Ltd.) and 1 g (100 parts by mass per 100 parts by mass of PVA) of magnesium oxide particles having an average particle size of 10 nm were mixed. The resulting mixture was heated to 700°C at a temperature-raising rate of 10°C/min under a nitrogen gas flow of 1250 mL/min per gram of the mixture, and heat-treated at that temperature for 60 minutes, affording a carbonized product. The carbonized product was washed by immersion in 1 mol/L sulfuric acid and stirring at 80°C for 30 minutes, and then removed onto a Buchner funnel. Washing with water was performed until the pH of the filtrate was in the range of 6 to 8. Acid washing and water washing were repeated three times, followed by hot air drying at 80°C, thereby affording particulate porous carbon 3.

### [Comparative Example 1]

KURARAY COAL GLC manufactured by KURARAY Co., Ltd. was used as porous carbon 4.

**[Table 1]**

| Table 1 Conditions for production of porous carbon | | | | | | | | |
|---|---|---|---|---|---|---|---|---|
| | | | Carbon source | Metal salt | | Ion-exchanged water [parts by mass relative to carbon source] | Carbonization raised temperature [°C/min] | Carbonization temperature [°C] |
| | | | | Type | Loading [parts by mass relative to carbon source] | | | |
| Example | 1 | Porous carbon 1 | Glucose | CaCl₂·2H₂O | 300 | 150 | 10 | 700 |
| | 2 | Porous carbon 2 | Glucose | CaCl₂·2H₂O | 200 | 100 | 10 | 700 |
| | 3 | Porous carbon 3 | PVA | MgO₂ (Average particle size: 10 nm) | 100 | - | 10 | 700 |
| Comparative Example | 1 | Porous carbon 4 | KURARAY COAL GLC | - | - | - | - | - |

**[Table 2]**

| Table 2 Physical properties of porous carbon | | | | | | | |
|---|---|---|---|---|---|---|---|
| | | | Volume of pores sized 2 to 200 nm determined by BJH method [cm³/g] | Volume of pores sized 2 nm or less determined by QS-DFT method [cm³/g] | Micropore ratio [%] | Slope of approximate straight line of mass transfer coefficient | Bulk density [g/cm³] |
| Example | 1 | Porous carbon 1 | 2.97 | 0.15 | 4.7 | 2.21 | 0.0386 |
| | 2 | Porous carbon 2 | 1.98 | 0.17 | 7.7 | 8.82 | 0.0406 |
| | 3 | Porous carbon 3 | 1.91 | 0.32 | 14.4 | 0.96 | 0.174 |
| Comparative Example | 1 | Porous carbon 4 | 0.91 | 0.82 | 47.3 | 0.94 | 0.240 |

An acidic gas solid absorber is produced by attaching an acidic gas absorbent to the produced porous carbon. In order to select a suitable attachment amount of each porous carbon, the amine attachment amount was changed to produce solid absorbers, and the carbon dioxide adsorption rate and the carbon dioxide adsorption amount thereof were measured.

### [Example 4-1]

In a 50 mL sample tube, 10 g of methanol was weighed, and 10.0 g of polyethyleneimine (average molecular weight: about 600) (sold by FUJIFILM Wako Pure Chemical Corporation) was added, then the mixture was stirred at room temperature to prepare a 50 mass% amine solution. 0.5 g of porous carbon 1 was weighed in a resealable plastic bag, and 1.5 mL of a 50% by mass amine solution was added thereto. While the resultant was heated to 60°C in a vacuum constant temperature dryer (manufactured by EYELA), the pressure in the resealable plastic bag was reduced to 0.03 MPa to remove the methanol solvent, thereby affording solid absorber 1-1 in which the amine was attached to porous carbon 1.

The amine attachment ratio was calculated from the mass change between the porous carbon mass before the amine attachment (denoted by W₁) and the mass of the solid absorber (denoted by W₂) according to the following equation. [Math 3] $Amine attachment ratio \left(%\right) = \frac{{W}_{2} - {W}_{1}}{{W}_{1}} \times 100$

### [Examples 4-2 to 4-5]

Solid absorbers 1-2 to 1-5 were obtained in the same manner as in Example 4-1 except that the amine attachment conditions were changed as shown in Table 3.

### [Comparative Example 2-1]

Solid absorber 4-1 was obtained in the same manner as in Example 4-1 except that porous carbon 1 was changed to porous carbon 4 and the amine attachment conditions were changed as shown in Table 3.

### [Comparative Examples 2-2 to 2-5]

Solid absorbers 4-2 to 4-5 were obtained in the same manner as in Comparative Example 2-1 except that the amine attachment conditions were changed as shown in Table 3.

### <Carbon dioxide adsorption amount per gram of solid absorber>

The carbon dioxide adsorption amount was measured using a thermogravimetric analyzer (manufactured by Shimadzu Corporation; TGA-51). 5 to 100 mg of a solid absorber was weighed according to the size of a pan and added to the pan. Subsequently, the solid absorber was dried by holding the solid absorber at 70°C for 60 minutes under a nitrogen flow rate in a thermogravimetric analyzer until the solid absorber reached a constant weight, and the temperature was lowered to 30°C. The mass at that time was defined as the mass after drying (W_{dry}). Thereafter, 15% by mass carbon dioxide gas was fed into the thermogravimetric analyzer at 4.2 L/min, and carbon dioxide was adsorbed to the solid absorber at 30°C for 2 hours. The mass after the adsorption for the first 60 seconds of the 2 hours was defined as the mass after adsorption (W_{abs60}). The carbon dioxide adsorption amount per gram of the solid absorber after 60-second adsorption (mg/g) was calculated from the mass after drying and the mass after adsorption according to the following equation. [Math 4] $\begin{matrix}Carbon dioxide adsorption amount per gram of solid absorber after 60 - second \\ adsorption \left[mg/g\right]\end{matrix} = \frac{{W}_{abs 60} \left[mg\right] - {W}_{dry} \left[mg\right]}{{W}_{dry} \left[g\right]}$

### <Carbon dioxide adsorption rate per gram of solid absorber>

In the measurement of the carbon dioxide adsorption amount, the carbon dioxide adsorption amount after 60-second adsorption was time-differentiated to calculate the carbon dioxide adsorption rate per gram of the solid absorber after 60-second adsorption.

### <Carbon dioxide desorption amount per gram of solid absorber>

As described above, the mass of the solid absorber after carbon dioxide was adsorbed at 30°C for 2 hours was defined as the mass after adsorption measurement (W_{abs}). The time of 2 hours was adopted as the time to be taken before the carbon dioxide adsorption amount was almost saturated. The solid absorber after the carbon dioxide adsorption measurement was heated to 70°C under a nitrogen flow rate in a thermogravimetric analyzer (manufactured by Shimadzu Corporation; TGA-51), and carbon dioxide was thereby desorbed. The mass after 60-second desorption was defined as the mass after desorption (W_{des60}). The carbon dioxide desorption amount per gram of the solid absorber after 60-second desorption (mg/g) was calculated from the mass after desorption (W_{des60}) and the mass after absorption measurement (W_{abs}) according to the following equation. [Math 5] $\begin{matrix}Carbon dioxide desorption amount per gram of solid absorber after 60 - second \\ desorption \left[mg/g\right]\end{matrix} = \frac{{W}_{abs} \left[mg\right] - {W}_{des 60} \left[mg\right]}{{W}_{abs} \left[g\right]}$

### <Carbon dioxide desorption rate per gram of solid absorber>

In the measurement of the carbon dioxide desorption, the carbon dioxide desorption amount after 60-second desorption was time-differentiated to calculate the carbon dioxide desorption rate per gram of the solid absorber after 60-second desorption.

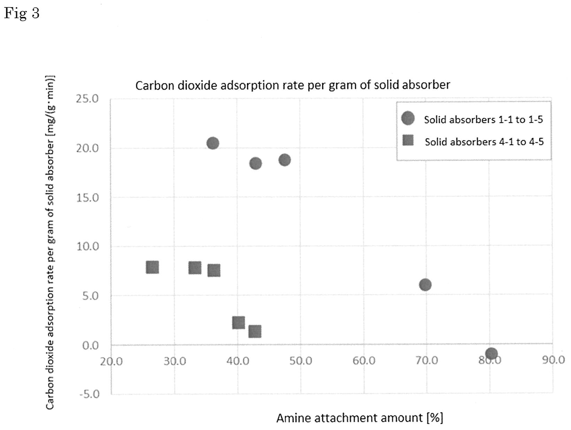

The carbon dioxide adsorption amount and the carbon dioxide adsorption rate in each of solid absorbers 1-1 to 1-5 and 4-1 to 4-5 are shown in Fig. 2 and Fig. 3, respectively. The amine attachment amounts of solid absorber 1-3 and solid absorber 4-3, which exhibited excellent carbon dioxide adsorption amounts and carbon dioxide adsorption rates when the amine attachment amount was increased, were defined as the representative amine attachment ratio of porous carbon 1 and the representative amine attachment ratio of porous carbon 4, respectively.

**[Table 3]**

| Table 3 Amine attachment conditions and amine attachment ratio thereby, carbon dioxide adsorption rate per gram of solid absorber after 60-second adsorption, and change in carbon dioxide adsorption amount per gram of solid absorber after 60-second adsorption | | | | | | | | |
|---|---|---|---|---|---|---|---|---|
| | | | Polyethyleneimine [g] | Concentration of amine solution [% by mass] | Amount of amine solution [mL] | Amine attachment ratio [% by mass] | Carbon dioxide adsorption rate per gram of solid absorber after 60-second adsorption [mg/(g·min)] | Carbon dioxide adsorption amount per gram of solid absorber after 60-second adsorption [mg/g] |
| Example | 4-1 | Solid absorber 1-1 | 10 | 50 | 1.5 | 80.2 | -0.993 | 3.031 |
| | 4-2 | Solid absorber 1-2 | 6.67 | 40 | 1.5 | 69.8 | 6.026 | 4.636 |
| | 4-3 | Solid absorber 1-3 | 4.29 | 30 | 1.5 | 47.5 | 18.79 | 13.34 |
| | 4-4 | Solid absorber 1-4 | 3.33 | 25 | 1.5 | 42.9 | 18.44 | 13.70 |
| | 4-5 | Solid absorber 1-5 | 4.29 | 30 | 1.0 | 36.2 | 20.54 | 13.69 |
| Comparative Example | 2-1 | Solid absorber 4-1 | 6.67 | 40 | 1.5 | 42.7 | 1.372 | 0.752 |
| | 2-2 | Solid absorber 4-2 | 6.67 | 40 | 1.0 | 40.1 | 2.243 | 0.859 |
| | 2-3 | Solid absorber 4-3 | 4.29 | 30 | 1.5 | 36.3 | 7.603 | 6.608 |
| | 2-4 | Solid absorber 4-4 | 4.29 | 30 | 1.0 | 33.3 | 7.840 | 6.739 |
| | 2-5 | Solid absorber 4-5 | 3.33 | 25 | 1.0 | 26.5 | 7.893 | 6.783 |

### [Examples 5 to 6]

For porous carbons 2 and 3 other than porous carbons 1 and 4, solid absorbers were produced with the amine attachment amount similarly changed, and the amine attachment ratio of each porous carbon was determined in the same manner as for porous carbon 1. For each solid absorber having a representative amine attachment ratio, the carbon dioxide adsorption rate per gram of the solid absorber after 60-second adsorption [mg/(g·min)], the carbon dioxide adsorption amount per gram of the solid absorber after 60-second adsorption [mg/g], the carbon dioxide desorption rate per gram of the solid absorber after 60-second desorption [mg/(g·min)], and the carbon dioxide desorption amount per gram of the solid absorber after 60-second desorption [mg/g] were determined. The results are described in Table 4. For each solid absorber, the volume of pores sized 2 nm or more and 200 nm or less and the micropore ratio were determined. Solid absorbers 2 and 3 were produced in the same manner as in Example 4-1 except that the production conditions were changed to those shown in Table 4.

**[Table 4]**

| Table 4 Production conditions and physical properties of solid absorber | | | | | | | | | | | | |
|---|---|---|---|---|---|---|---|---|---|---|---|---|
| | | | Polyethyleneimine [g] | Concentration of amine solution [% by mass] | Amount of amine solution [mL] | Representative amine attachment ratio [% by mass] | Volume of pores sized 2 to 200 nm determined by BJH method [cm³/g] | Micropore ratio [%] | Carbon dioxide adsorption rate per gram of solid absorber after 60-second adsorption [mg/(g·min)] | Carbon dioxide adsorption amount per gram of solid absorber after 60-second adsorption [mg/g] | Carbon dioxide desorption rate per gram of solid absorber after 60-second desorption [mg/(g·min)] | Carbon dioxide desorption amount per gram of solid absorber after 60-second desorption [mg/g] |
| Example | 4-3 | Solid absorber 1-3 | 4.29 | 30 | 1.5 | 47.5 | 1.30 | 0.0 | 18.79 | 13.34 | 24.0 | 17.0 |
| | 5 | Solid absorber 2 | 4.29 | 30 | 1.0 | 37.1 | 1.13 | 0.6 | 52.03 | 28.54 | 6.8 | 7.4 |
| | 6 | Solid absorber 3 | 4.29 | 30 | 1.0 | 41.0 | 0.99 | 9.8 | 9.433 | 6.446 | 6.8 | 5.9 |
| Comparative Example | 2-3 | Solid absorber 4-3 | 4.29 | 30 | 1.5 | 36.3 | 0.41 | 18.4 | 7.603 | 6.608 | 3.2 | 2.4 |

### INDUSTRIAL APPLICABILITY

The porous carbon of the present invention can provide an excellent carbon dioxide adsorption/desorption rate in a short time and a high carbon dioxide adsorption/desorption amount in a short time when used as a carrier for a solid absorber in an acidic gas solid absorber. Therefore, the porous carbon of the present invention can be suitably used as a carrier for an acidic gas solid absorber.

## Claims

1. Porous carbon for an acidic gas solid absorber carrier, wherein a pore volume of pores having a pore diameter of 2 nm or more and 200 nm or less calculated by a BJH method from a nitrogen adsorption isotherm is 0.7 cm³/g or more, and a ratio of a pore volume of pores having a pore diameter of 2 nm or less calculated by a QS-DFT method from a nitrogen adsorption isotherm to a sum of the pore volume of the pores having a pore diameter of 2 nm or more and 200 nm or less calculated by the BJH method and the pore volume of the pores having a pore diameter of 2 nm or less calculated by the QS-DFT method is 45% or less.

2. The porous carbon according to claim 1, wherein a slope of an approximate straight line obtained by converting a change in pressure of nitrogen until reaching an adsorption equilibrium at each prescribed relative pressure in measurement of a nitrogen adsorption isotherm into a mass transfer coefficient using LDF approximation and linearly approximating a relationship between a relative pressure and a mass transfer coefficient at a relative pressure of 1.0 × 10⁻⁴ or more and 1.0 × 10⁻³ or less is 0.95 or more.

3. The porous carbon according to claim 1, wherein the porous carbon has a bulk density of 0.17 g/cm³ or less.

4. The porous carbon of claim 1, wherein the acidic gas is carbon dioxide.

5. An acidic gas solid absorber comprising the porous carbon according to claim 1 and an acidic gas absorbent, wherein the acidic gas absorbent is attached to the porous carbon.

6. The acidic gas solid absorber according to claim 5, wherein the acidic gas absorbent is an amine compound.

7. The acidic gas solid absorber according to claim 5, wherein a pore volume of pores having a pore diameter of 2 nm or more and 200 nm or less calculated by a BJH method from a nitrogen adsorption isotherm is 0.7 cm³/g or more, and a ratio of a pore volume of pores having a pore diameter of 2 nm or less calculated by a QS-DFT method from a nitrogen adsorption isotherm to a sum of the pore volume of the pores having a pore diameter of 2 nm or more and 200 nm or less calculated by the BJH method and the pore volume of the pores having a pore diameter of 2 nm or less calculated by the QS-DFT method is 40% or less.

8. A method for separating and capturing an acidic gas, the method comprising: an absorption step of bringing a gas to be treated into contact with the acidic gas solid absorber according to claim 5 to allow the acidic gas solid absorber to absorb the acidic gas; and a desorption step of desorbing the acidic gas absorbed in the absorption step from the acidic gas solid absorber, wherein the desorption step comprises subjecting the acidic gas solid absorber to at least one or more selected from the group consisting of (A) depressurization; (B) contact with an inert gas containing no acidic gas; and (C) heating.

9. A moving bed type acidic gas separation and capture system comprising the acidic gas solid absorber according to claim 5 in a moving bed.

10. The moving bed type acidic gas separation and capture system according to claim 9, comprising a rotary honeycomb rotor as means for moving the acidic gas solid absorber, wherein the acidic gas solid absorber is carried on the rotary honeycomb rotor.
